# EUROPEAN PATENT APPLICATION

(11) **EP 3 202 530 A1**
(43) Date of publication of application: **09.08.2017**
(21) Application number: 15846239.0
(22) Date of filing: 16.09.2015
(51) Int. Cl.: B23P 19/02, B23P 19/04, B25J 15/08

(54) **O-RING MOUNTING DEVICE AND METHOD**

(30) Priority: 30.09.2014 JP 2014199802
(71) Applicant: Kawasaki Jukogyo Kabushiki Kaisha, Kobe-shi, Hyogo 650-8670 (JP)
(72) Inventor: MIZUMOTO, Hiroyuki, Akashi-shi Hyogo 673-8666 (JP); MURAKAMI, Junichi, Akashi-shi Hyogo 673-8666 (JP)
(74) Representative: Müller-Boré & Partner Patentanwälte PartG mbB
(86) International application number: PCT/JP2015/076295
(87) International publication number: WO 2016/052202

(57) **Abstract**

An O-ring mounting device 1 has an O-ring support unit 15, 16 capable of supporting an O-ring from its inside at at least three support points, an O-ring pressing-in unit 14, 27 for pressing-in the O-ring from its outside between two support points of the at least three support points; and an pressed-in state releasing unit 23 for releasing a pressed-in state of the O-ring made by the O-ring pressing-in unit 14, 27. An O-ring mounting device which is applicable in a wide range without being restricted by a dimension of the O-ring or the like can be provided.

## Description

### Technical Field

The present invention relates to an O-ring mounting device for mounting an O-ring to an O-ring groove formed in a workpiece's inner peripheral surface, an articulated robot comprising the device, and an O-ring mounting method using the device.

### Background Art

Generally, a work for mounting an O-ring to an O-ring groove formed in an inner peripheral surface of an annular workpiece, for example is performed by a worker by hand.

When mounting an O-ring to an O-ring groove by hand, a worker needs to firstly press a part of the O-ring into the O-ring groove with the fingertips, and subsequently press the O-ring into the O-ring groove along a circumferential direction, and finally adjust the whole in the circumferential direction.

As mentioned above, the O-ring mounting work by a worker takes a lot of time and labor.

On this issue, a device for automatically mounting the O-ring to the O-ring groove is proposed (Patent Document 1, etc.)

### Citation List

### Patent Document

Patent Document 1: Japanese Patent Application Laid-Open No. 2010-76037

### Summary of Invention

### Objects to be Achieved by the Invention

However, there is a problem that the conventionally-proposed O-ring mounting device has an extremely limited applicable range and lacks versatility. For example, since the device of Patent document 1 is a large scale device in which motors and cylinders are placed under a workpiece, it is difficult to apply the device to an O-ring unless the O-ring has a relatively large dimension.

The present invention is made considering the above-mentioned problems of the conventional technologies, and its object is to provide an O-ring mounting device which is applicable in a wide range without being restricted by a dimension of the O-ring or the like, an articulated robot comprising the device, and an O-ring mounting method using the device.

### Mean for Achieving the Objects

In order to achieve the objects above, a first aspect of the present invention is an O-ring mounting device for mounting an O-ring in an O-ring groove formed in a workpiece's inner peripheral surface, comprising: an O-ring support unit capable of supporting the O-ring from its inside at at least three support points; an O-ring pressing-in unit for pressing-in the O-ring from its outside between two support points of the at least three support points; and an pressed-in state releasing unit for releasing a pressed-in state of the O-ring made by the O-ring pressing-in unit.

A second aspect of the present invention is that, in the first aspect, the at least three support points can be arranged inside the O-ring in a natural state where no external force is applied, separated from an the inner peripheral portion of the O-ring, and the inner peripheral portion of the O-ring abuts on the at least three support points by pressing-in the O-ring by the O-ring pressing-in unit.

A third aspect of the present invention is that, in the first or second aspect, the O-ring pressing-in unit has a pressing member which abuts on an outer peripheral portion of the O-ring and presses-in the O-ring from its outside between the support points, and the pressed-in state releasing unit moves the pressing member which has pressed-in the O-ring in a direction intersecting with its pressing-in direction so as to release the pressed-in state of the O-ring.

A fourth aspect of the present invention is that, in any one of the first to third aspects, the O-ring support unit has a function of widening an interval of the two support points so as to move the two support points to a direction of the workpiece's inner peripheral surface.

A fifth aspect of the present invention is that, in any one of the first to fourth aspects, the O-ring pressing-in unit has a pressing direction along a radial direction of the O-ring, and the at least three support points are arranged symmetrically relative to a virtual plane including a center axis of the O-ring and a virtual line in the pressing-in direction.

A sixth aspect of the present invention is that, in the fifth aspect, the two support points are arranged symmetrically relative to the virtual plane, and the at least three support points include the two support points and one support point in a position corresponding to the reference plane.

A seventh aspect of the present invention is that, in the sixth aspect, each support point is arranged on each side of the reference plane, adjacent to the one support point.

An eighth aspect of the present invention is that, in any one of the first to seventh aspects, the support point is formed of a support plane including the support point.

A ninth aspect of the present invention is that, in any one of the first to eighth aspects, at least one of the at least three support points of the O-ring support unit is included in a tapered surface which guides the O-ring pressed-in by the O-ring pressing-in unit, and a projection portion which positions the O-ring is formed adjacent to the tapered surface.

A tenth aspect of the present invention is any one of the first to ninth aspects, further comprising an O-ring positioning unit for inserting the O-ring which has been pressed-in by the O-ring pressing-in unit inside the workpiece's inner peripheral surface so that the O-ring is positioned in a position corresponding to the O-ring groove.

An eleventh aspect of the present invention is an articulated robot comprising the O-ring mounting device according to the tenth aspect, wherein the O-ring positioning unit has an arm of the articulated robot.

A twelfth aspect of the present invention is an O-ring mounting method of mounting the O-ring in the O-ring groove formed in the workpiece's inner peripheral surface using the O-ring mounting device according to any one of the first to tenth aspects, comprising: an insert process in which the O-ring support unit is inserted inside the O-ring; a pressing-in process in which the O-ring is pressed-in from its outside between the two support points by the O-ring pressing-in unit; a positioning process in which the O-ring which has been pressed-in by the O-ring pressing-in unit is inserted inside the workpiece's inner peripheral surface so that the O-ring is positioned in a position corresponding to the O-ring groove; and a release fitting process in which a pressed-in state of the O-ring made by the O-ring pressing-in unit is released by the pressed-in state releasing unit so that the O-ring is fitted in the O-ring groove due to its elasticity.

A thirteenth aspect of the present invention is an O-ring mounting method of mounting the O-ring in the O-ring groove formed in the workpiece's inner peripheral surface using the O-ring mounting device according to the fourth aspect, comprising: an insert process in which the O-ring support unit is inserted inside the O-ring; a pressing-in process in which the O-ring is pressed-in from its outside between the two support points by the O-ring pressing-in unit; a positioning process in which the O-ring which has been pressed-in by the O-ring pressing-in unit is inserted inside the workpiece's inner peripheral surface so that the O-ring is positioned in a position corresponding to the O-ring groove; a pre-fitting process in which the two support points are moved to a direction of the workpiece's inner peripheral surface so that a part of the O-ring is fitted in the O-ring groove; and a release fitting process in which a pressed-in state of the O-ring made by the O-ring pressing-in unit is released by the pressed-in state releasing unit so that the O-ring is fitted in the O-ring groove due to its elasticity.

A fourteenth aspect of the present invention is that, in the thirteenth aspect, the two support points are moved along the workpiece's inner peripheral surface after the release fitting process so that the O-ring is pressed against a bottom portion of the O-ring groove.

A fifteenth aspect of the present invention is that, in any one of the twelfth to fourteenth aspects, the positioning process is performed by an arm operation of an articulated robot to which the O-ring support unit is mounted.

### Effect of the Invention

According to the present invention, O-ring mounting device which is applicable in a wide range without being restricted by a dimension of the O-ring or the like, an articulated robot comprising the device, and an O-ring mounting method using the device can be provided.

### Brief Description of the Drawings

FIG. 1 is a perspective view illustrating an articulated robot comprising an O-ring mounting device according to one embodiment of the present invention.
FIG. 2 is a perspective view illustrating an O-ring mounting device according to one embodiment of the present invention.
FIG. 3 is a plan view illustrating a distal end side plate of the O-ring mounting device in FIG. 2.
FIG. 4 is an enlarged view of an O-ring handling section of the O-ring mounting device in FIG. 2, and (a) is a sectional view taken along a line A-A of (b).
FIG. 5 is a schematic view illustrating an O-ring mounting operation by the O-ring mounting device in FIG. 2: (a) is a partial sectional view viewed from the above, and (b) is a partial sectional view viewed from the side.
FIG. 6 is a schematic view illustrating the O-ring mounting operation by the O-ring mounting device in FIG. 2: (a) is a partial sectional view viewed from the above, and (b) is a partial sectional view viewed from the side.
FIG. 7 is a schematic view illustrating the O-ring mounting operation by the O-ring mounting device in FIG. 2: (a) is a partial sectional view viewed from the above, and (b) is a partial sectional view viewed from the side.
FIG. 8 is a schematic view illustrating the O-ring mounting operation by the O-ring mounting device in FIG. 2: (a) is a partial sectional view viewed from the above, and (b) is a partial sectional view viewed from the side.
FIG. 9 is a schematic view illustrating the O-ring mounting operation by the O-ring mounting device in FIG. 2: (a) is a partial sectional view viewed from the above, and (b) is a partial sectional view viewed from the side.
FIG. 10 is a schematic view illustrating the O-ring mounting operation by the O-ring mounting device in FIG. 2: (a) is a partial sectional view viewed from the above, and (b) is a partial sectional view viewed from the side.
FIG. 11 is a schematic view illustrating the O-ring mounting operation by the O-ring mounting device in FIG. 2: (a) is a partial sectional view viewed from the above, and (b) is a partial sectional view viewed from the side.
FIG. 12 is a schematic view illustrating the O-ring mounting operation by the O-ring mounting device in FIG. 2: (a) is a partial sectional view viewed from the above, and (b) is a partial sectional view viewed from the side.
FIG. 13 is a schematic view illustrating the O-ring mounting operation by the O-ring mounting device in FIG. 2, which illustrates a state that a rotation position is changed in the order of (a), (b), (c).
FIG. 14 is a schematic view illustrating the O-ring mounting operation by the O-ring mounting device in FIG. 2: (a) is a partial sectional view viewed from the above, and (b) is a partial sectional view viewed from the side.
FIG. 15 is a schematic view illustrating the O-ring mounting operation by the O-ring mounting device in FIG. 2: (a) is a partial sectional view viewed from the above, and (b) is a partial sectional view viewed from the side.
FIG. 16 illustrates one variation of the O-ring mounting device in FIG. 2: (a) is a partial sectional view viewed from the above, and (b) is a partial sectional view viewed from the side.
FIG. 17 illustrates another variation of the O-ring mounting device in FIG. 2.
FIG. 18 illustrates another variation of the O-ring mounting device in FIG. 2.
FIG. 19 illustrates an O-ring mounting device according to another embodiment of the present invention.

### Embodiment of the Invention

Hereunder, an articulated robot comprising an O-ring mounting device according to one embodiment of the present invention will be described referring to the drawings. The O-ring mounting device according to this embodiment is for mounting an O-ring to an O-ring groove formed in an inner peripheral surface of an annular workpiece.

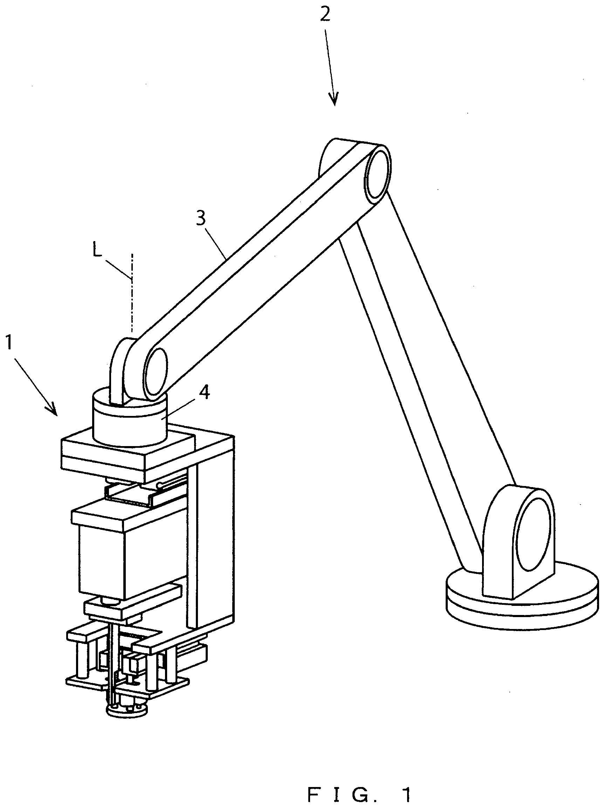

As illustrated in FIG. 1, an O-ring mounting device 1 according to this embodiment is attached to a wrist shaft 4 on a distal end of an arm 3 of an articulated robot 2. By driving the robot arm 3, the O-ring mounting device 1 can be moved to a predetermined position. The wrist shaft 4 of the robot arm 3 is rotatable about a rotation axis L, and the O-ring mounting device 1 can be rotated integrally with the wrist shaft 4 about the rotation axis L.

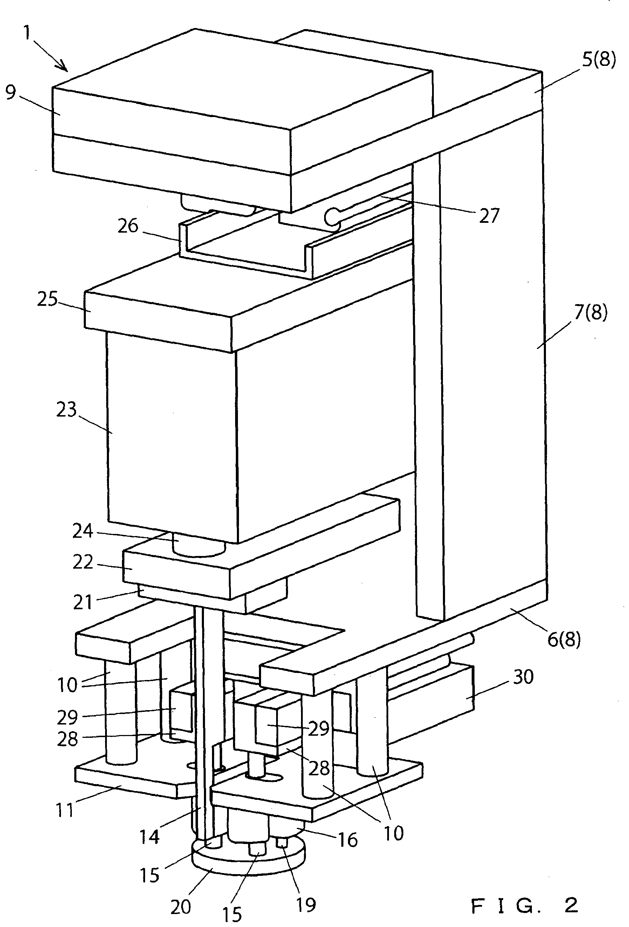

As illustrated in FIG. 2, the O-ring mounting device 1 comprises an upper plate 5 and a lower plate 6 arranged separated from each other. A lower surface peripheral edge portion of the upper plate 5 and an upper surface peripheral edge portion of the lower plate 6 are connected via a plate-like connecting member 7. A frame body 8 inside which a storage space is formed is formed of the upper plate 5, the lower plate 6, and the connecting member 7. A mounting plate 9 is fixedly provided to an upper surface of the upper plate 5, and an upper surface of the mounting plate 9 is attached to the wrist shaft 4 of the robot arm3.

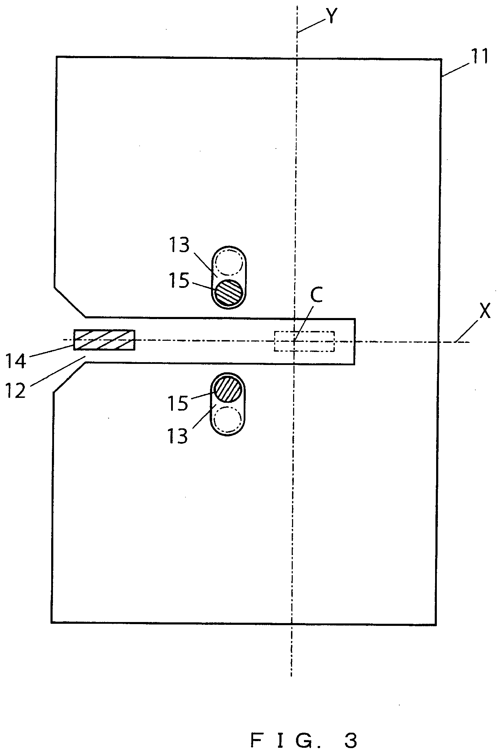

As illustrated in FIG. 2, a distal end side plate 11 is fixedly provided to a lower surface of the lower plate 6 via four support members 10. As illustrated in FIG. 3, a notched portion 12 extending in a longitudinal direction X running through a center C of the distal end side plate 11 is formed in the distal end side plate 11 from a center of its front edge portion toward the rear. Each through hole 13 in an elliptic shape which is long in a lateral direction Y is formed on each lateral side of the notched portion 12. The center C of the distal end side plate 11 coincides with the rotation axis L of the wrist shaft 4 of the robot arm 3.

An O-ring pressing member 14 extending in a vertical direction is inserted through the notched portion 12 of the distal end side plate 11. Each movable support member 15 extending in the vertical direction is inserted through each through hole 13 of the distal end side plate 11. The movable support member 15 is a member for supporting an O-ring to be mounted to a workpiece. The O-ring pressing member 14 can be moved longitudinally in the notched portion 12 along the longitudinal direction X. The movable support member 15 can be moved laterally in the through hole 13 in the lateral direction Y.

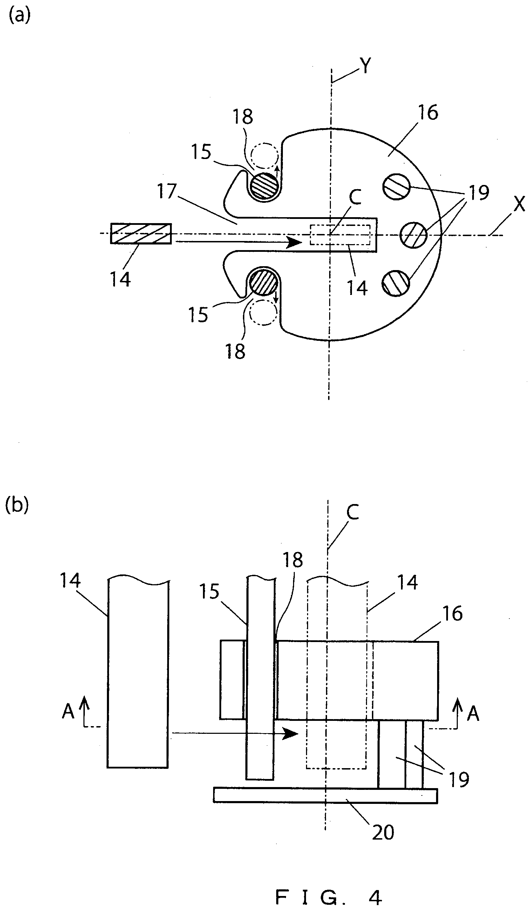

As illustrated in FIG. 2, a column member 16 in a substantially columnar shape is fixedly provided to a lower surface of the distal end side plate 11. The center C of the distal end side plate 11 coincides with a center of the column member 16. As illustrated in FIG. 4, a notched portion 17 extending in the lateral direction is formed in the column member 16, corresponding to the notched portion 12 of the distal end side plate 11. Additionally, in the column member 16, each notched portion 18 extending in the lateral direction is formed, corresponding to each through hole 13 of the distal end side plate 11.

As illustrated in FIG. 4, the O-ring pressing member 14 can be inserted through the notched portion 17 in the longitudinal direction X of the column member 16. Each movable support member 15 is inserted through each notched portion 18 in the lateral direction of the column member 16. As illustrated in FIG. 4(a), the O-ring pressing member 14 in the outermost position is completely out of the notched portion 17 in the longitudinal direction X of the column member 16. The movable support member 15 in the outermost position partly protrudes from the notched portion 18 in the lateral direction of the column member 16.

As illustrated in FIG. 4, a circular plate 20 is fixedly provided to a lower surface of the column member 16 via three bar-shaped fixed support members 19. A center of the circular plate 20 coincides with the center C of the column member 16. The circular plate 20 has a diameter which is insertable inside an inner peripheral surface of a workpiece to which an O-ring is mounted.

The fixed support member 19 is a member for supporting an O-ring to be mounted to a workpiece. As illustrated in FIG. 4(a), of the three fixed support members 19, the fixed support member 19 in the middle is arranged on a virtual line in the longitudinal direction X running through the center C of the column member 16. The other two fixed support members 19 are arranged symmetrically relative to a virtual plane including said virtual line and perpendicular to the lateral direction Y. The fixed support member 19 in the middle is positioned radially outside relative to a virtual line in the lateral direction Y running through a pair of left-and-right fixed support members 19.

As illustrated in FIG. 2, an upper end of the O-ring pressing member 14 is fixedly provided to an elevating/lowering plate 22 via a mounting piece 21. The elevating/lowering plate 22 is fixedly provided to a distal end of a piston 24 of a cylinder for elevation/lowering 23. By driving the cylinder for elevation/lowering 23 so as to advance/retreat its piston 24, the O-ring pressing member 14 can be elevated/lowered together with the elevating/lowering plate 22.

The cylinder for elevation/lowering 23 is fixedly provided to a slide member 26 via a mounting piece 25. The slide member 26 can be moved in the longitudinal direction X by a cylinder for slide 27. By driving the cylinder for slide 27 so as to slide the slide member 26, the O-ring pressing member 14 can be operated longitudinally together with the cylinder for elevation/lowering 23.

An upper end of each movable support member 15 is fixedly provided to each opening/closing member 29 via each mounting piece 28. Each opening/closing member 29 is fixedly provided to each output shaft 31 of a cylinder for open/close 30. The cylinder for open/close 30 is fixedly provided to a lower surface of the lower plate 6. By driving the cylinder for open/close 30 so as to widen or narrow an interval between a pair of opening/closing members 29, an interval of a pair of movable support members 15 can be widened or narrowed.

The cylinder for elevation/lowering 23, the cylinder for slide 27, and the cylinder for open/close 30 can be driven and controlled by a controller for the articulated robot 2. Note that, although the cylinder for elevation/lowering 23, the cylinder for slide 27, and the cylinder for open/close 30 can be configured by air cylinders, for example, all or part of those can be substituted by servo motors.

The above-stated two movable support members 15 and the three fixed support members 19 configure an O-ring support unit which can support an O-ring from its inside at at least three (five in this example) support points.

The five support points formed of the two movable support members 15 and the three fixed support members 19 are arranged symmetrically relative to a virtual plane including a center axis of an O-ring which is substantially coincident with the center C of the column member 16 and a virtual line in a pressing-in direction. The five support points in this example can be arranged inside the O-ring in a natural state where no external force is applied, separated from the inner peripheral portion of the O-ring.

The above-mentioned O-ring pressing member 14 and the cylinder for slide 27 configure an O-ring pressing-in unit for pressing-in the O-ring from its outside between two support points of the at least three support points of the O-ring support unit.

The above-mentioned cylinder for elevation/lowering 23 configures a pressed-in state releasing unit for releasing the pressed-in state of the O-ring made by the O-ring pressing-in unit.

The above-mentioned robot arm 3 configures an O-ring positioning unit for inserting the O-ring which is pressed-in by the O-ring pressing-in unit inside an inner peripheral surface of a workpiece and positioning the O-ring in a position corresponding to an O-ring groove.

Next, a method of mounting the O-ring in the O-ring groove formed in the inner peripheral surface of an annular workpiece using the articulated robot 2 comprising the O-ring mounting device 1 according to this embodiment will be described referring to the drawings.

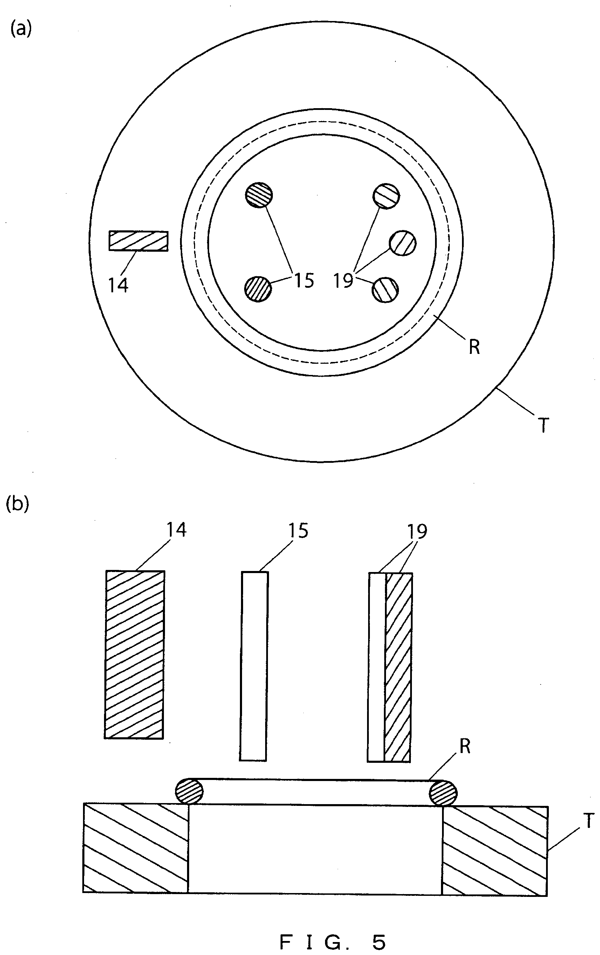

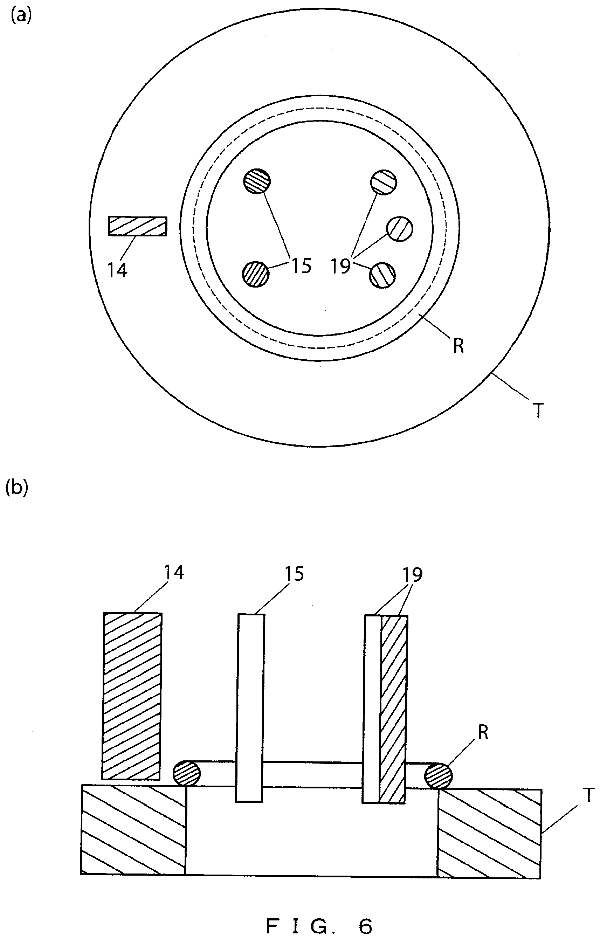

FIG. 5 illustrates a state that an O-ring R is placed on an upper surface of an annular O-ring placing table T concentrically with the O-ring placing table T. Note that, and in FIG. 5, the circular plate 20 is omitted (the same is true in FIG. 6 to FIG. 12, FIG. 14 to FIG. 16).

The robot arm 3 is operated so as to arrange the O-ring support unit (movable support member 15 and the fixed support member 19) and the O-ring pressing-in unit (O-ring pressing member 14) of the O-ring mounting device 1 above the O-ring R on the O-ring placing table T. More specifically, the robot arm 3 is operated so that the two movable support members 15 and the three support members 19 are positioned above an inside area of the O-ring R and also the O-ring pressing member 14 is positioned above the O-ring placing table T in an outside area of the O-ring R. At this time, the two movable support members 15 are in a state that their separation distance is narrowed (approaching state).

From the state illustrated in FIG. 5, the robot arm 3 is driven so as to lower the O-ring mounting device 1, and the lowering operation is stopped immediately before a distal end portion of the O-ring pressing member 14 comes into contact with a surface of the O-ring placing table T (insert process), as illustrated in FIG. 6. Thereby, the distal end portion of the O-ring pressing member 14 is arranged near an outer peripheral portion of the O-ring R and also each distal end portion of each movable support member 15 and each fixed support member 19 is arranged inside the O-ring R.

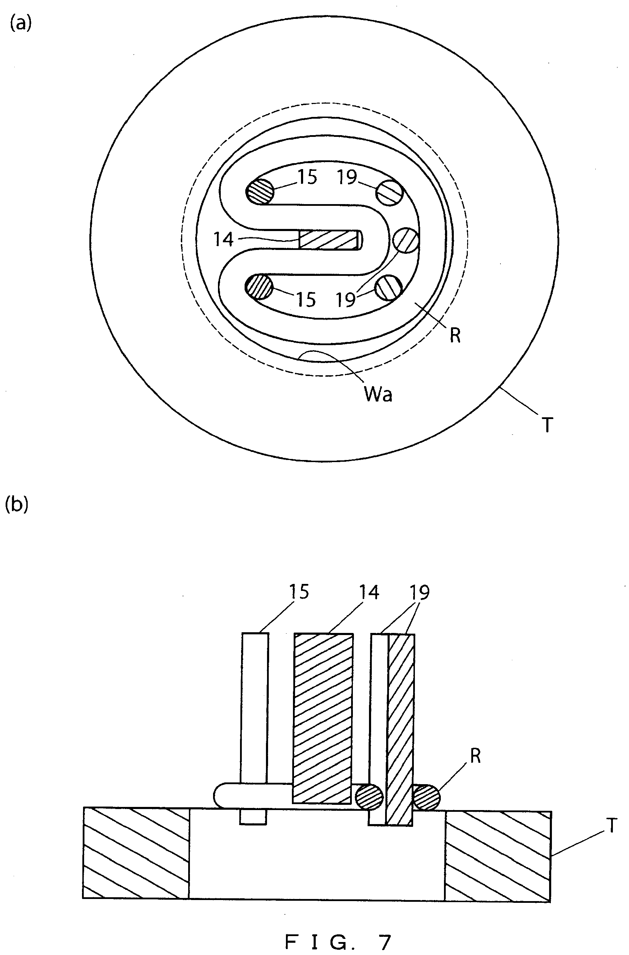

From the state in FIG. 6, the cylinder for slide 27 is driven so as to move the O-ring pressing member 14 toward the center of the O-ring R (pressing-in process). Thereby, the O-ring pressing member 14 abuts on the outer peripheral portion of the O-ring R and a part of the O-ring R is pressed in between the two movable support members 15, as illustrated in FIG. 7.

Here, since the O-ring pressing member 14 is configured to press in the outer peripheral surface of the O-ring R from the outside, an operation such as clamping the O-ring R for pressing-in the O-ring R is not necessary. Therefore, even when grease or the like is applied on the surface of the O-ring R and the O-ring R becomes smooth, the pressing-in operation of the O-ring R can be performed without difficulty.

By pressing-in a part of the O-ring R between the two movable support members 15 by the O-ring pressing member 14, an inner peripheral portion of the O-ring R abuts on each movable support member 15 and each fixed support member 19, as illustrated in FIG. 7. The O-ring R in the pressed-in state abuts on the O-ring pressing member 14, each movable support member 15, and each fixed support member 19, and it is held there.

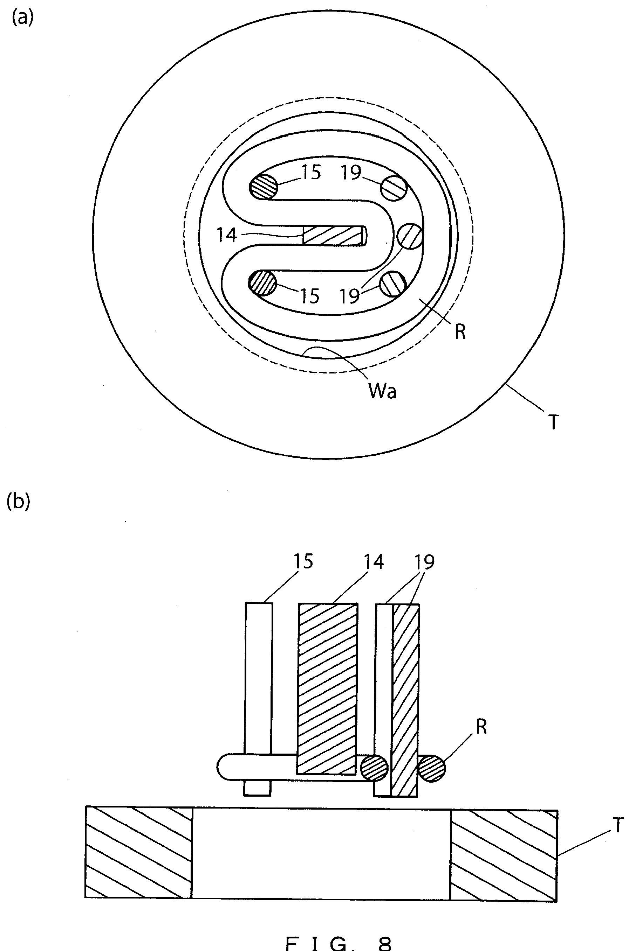

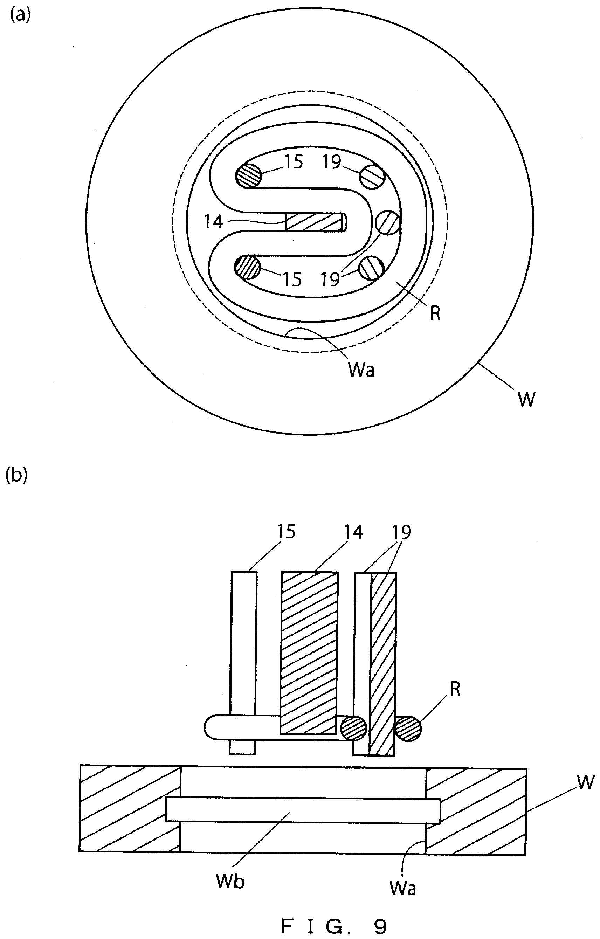

From the state illustrated in FIG. 7, the robot arm 3 is driven so as to pull up the O-ring mounting device 1 upward so that the O-ring R is pulled up from on the O-ring placing table T as illustrated in FIG. 8. Subsequently, the robot arm 3 is driven so as to transfer the O-ring mounting device 1 to the workpiece W side so that the O-ring R is transferred above the workpiece W, as illustrated in FIG. 9.

An O-ring groove Wb is formed in an inner peripheral surface of the workpiece W. An outer diameter of the O-ring R is set to a dimension larger than a diameter of the workpiece's inner peripheral surface Wa.

As seen from FIG. 9, the whole O-ring R in the pressed-in state has a shape to be generally accommodated in an inside area of the inner peripheral surface Wa of the workpiece W. Note that the whole O-ring R does not need to be completely accommodated in the inside area of the inner peripheral surface Wa of the workpiece W, and a part of the O-ring may slightly protrude.

Since a part of the O-ring R opposite to a part supported by the movable support members 15 is widely supported using the three fixed support members 19 in this embodiment, the shape of the O-ring R in the pressed-in state can be optimized so as to be generally accommodated in the inside area of the inner peripheral surface Wa of the workpiece W.

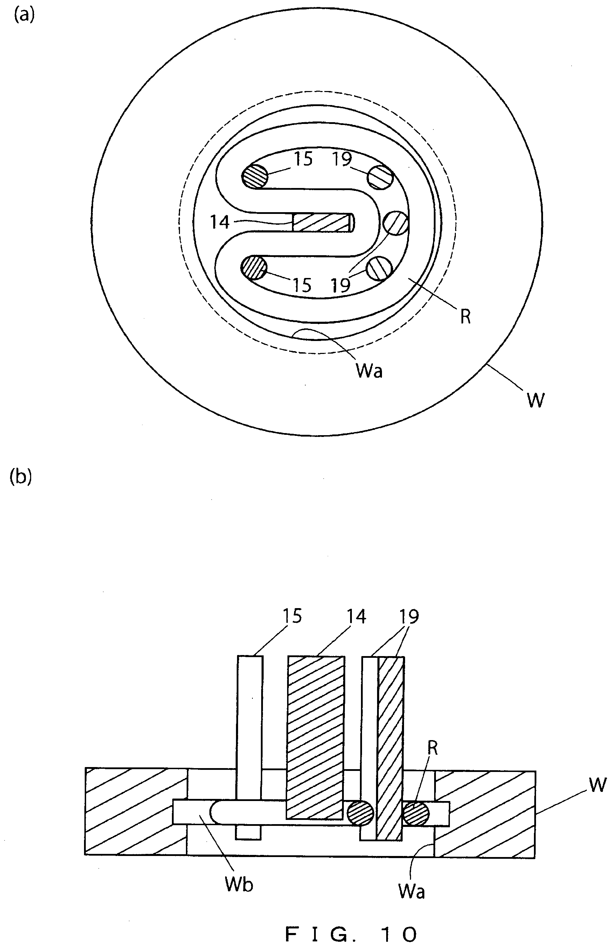

From the state illustrated in FIG. 9, the robot arm 3 is driven so as to lower the O-ring mounting device 1 so that the O-ring R in the pressed-in state is inserted inside the inner peripheral surface Wa of the workpiece W and the O-ring R is positioned in a position corresponding to the O-ring groove Wb, as illustrated in FIG. 10 (positioning process).

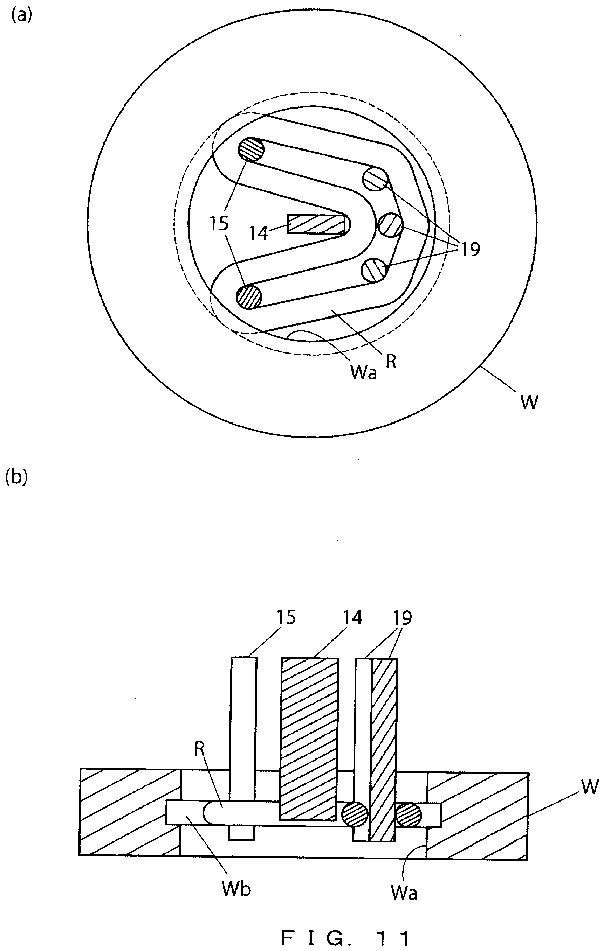

From the state illustrated in FIG. 10, the cylinder for open/close 30 is driven so as to widen the interval of the two movable holding members 15 in the approaching state, thereby making a separated state as illustrated in FIG. 11. Thereby, each movable holding member 15 comes close to the workpiece's inner peripheral surface Wa and also the part of the O-ring R supported by the movable holding member 15 is fitted into the O-ring groove Wb (pre-fitting process).

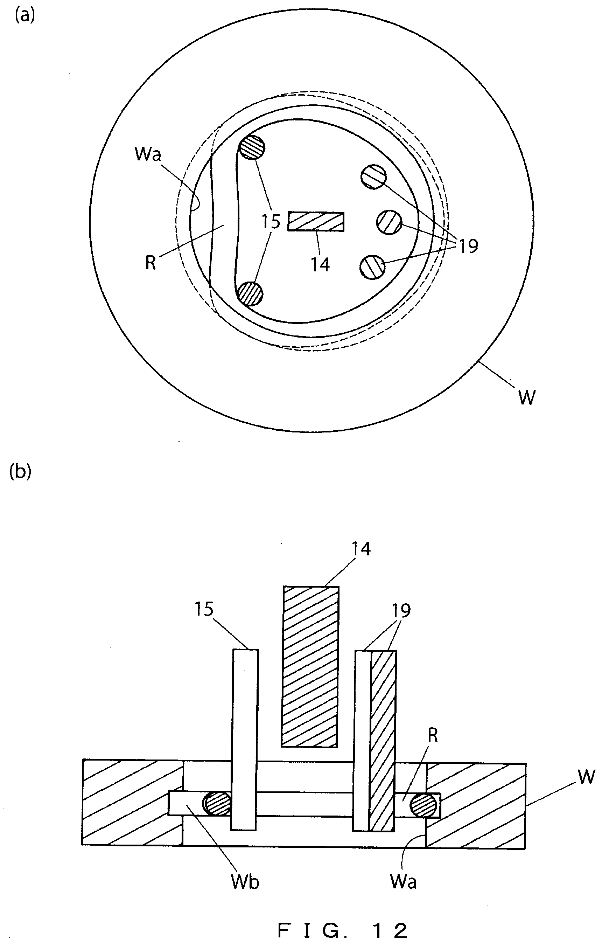

From the state illustrated in FIG. 11, the cylinder for elevation/lowering 23 is driven so as to pull up the O-ring pressing member 14 so that the engagement state of the O-ring pressing member 14 with the O-ring R is released. Thereby, the pressed-in state of the O-ring R is released. The O-ring released from the pressed-in state tends to return to a shape in a natural state that an external force is not applied, due to its own elasticity. As a result, the O-ring R generally fits into the O-ring groove Wb, as illustrated in FIG. 12 (release fitting process).

Note that, although the O-ring pressing member 14 is pulled up in a direction orthogonal to the pressing-in direction in this embodiment, a moving direction of the O-ring pressing member 14 in the release fitting process is not limited to this direction, and the O-ring pressing member 14 only needs to be moved in a direction intersecting with the pressing-in direction so as to release the pressed-in state of the O-ring R.

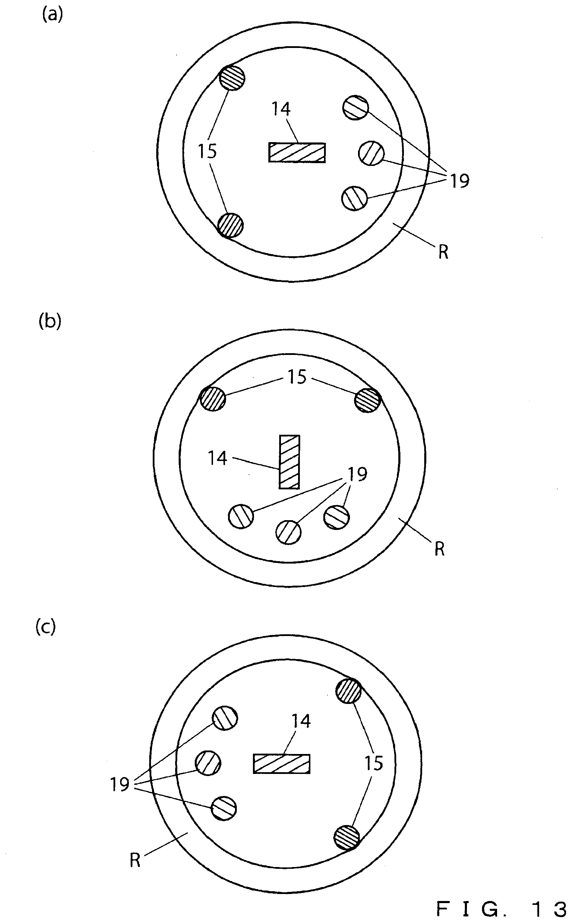

From the state illustrated in FIG. 12, the wrist shaft 4 of the robot arm 3 is driven and rotated so as to rotate the O-ring mounting device 1. Thereby, the two movable support members 15 are moved along the workpiece's inner peripheral surface Wa as illustrated in FIG. 13, and accordingly the O-ring R is pressed against a bottom portion of the O-ring groove Wb. As a result, the O-ring R is fully fitted into the O-ring groove Wb over the whole circumference.

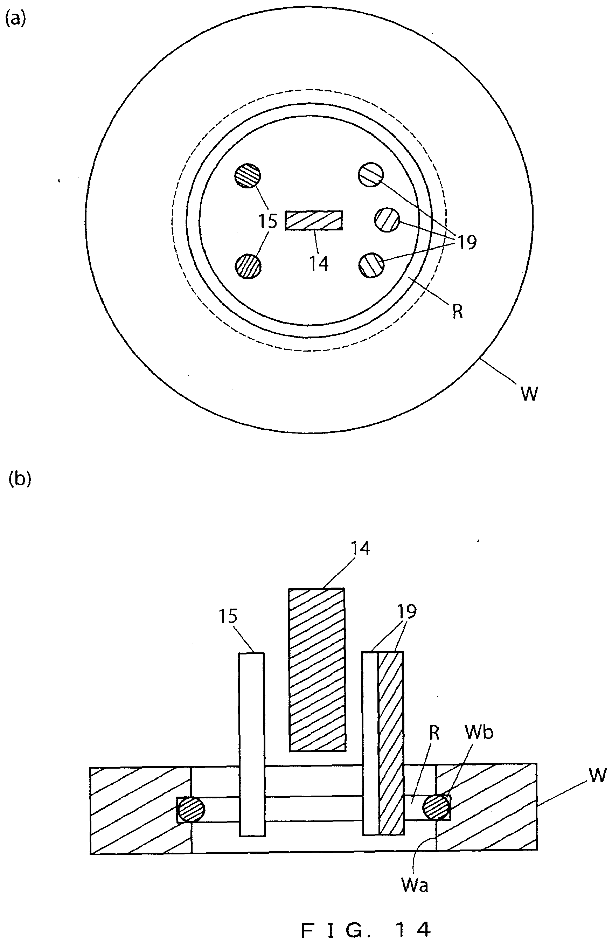

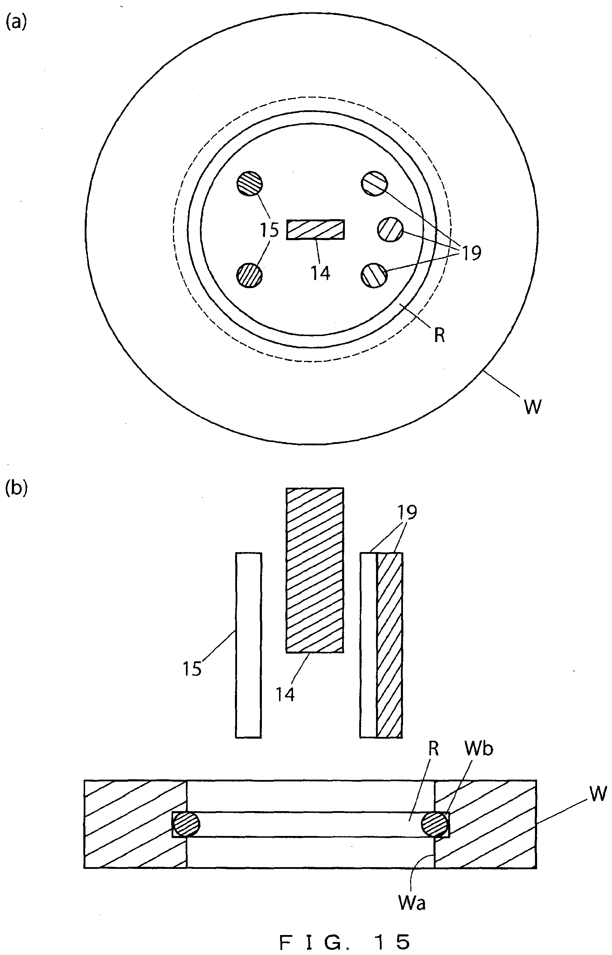

After the fitting operation of the O-ring R into the O-ring groove Wb is finished, the cylinder for open/close 30 is driven so as to switch the two movable support members 15 from the separated state to the approaching state, as illustrated in FIG. 14. Subsequently, the robot arm 3 is driven so as to elevate the O-ring mounting device 1 so that the movable holding members 15 and the fixed holding members 19 are retreated from the workpiece W, as illustrated in FIG. 15. Thereby, the O-ring mounting work to the workpiece W is finished.

As mentioned above, since a big-scale device like a conventional technology is not needed in this embodiment, there is an advantage that a dimension of the O-ring R which can be handled is hardly restricted.

Additionally, in this embodiment, when changing the specification of the O-ring handling device 1 according to the size of the O-ring R, users only need to change the arrangement of the movable holding members 15 and the fixed support members 19 and the moving stroke of the movable holding members 15 in the longitudinal direction, or exchange the distal end side plate 11 as necessary, and therefore design change according to the size of the O-ring R can be easily accomplished.

Additionally, since the outer peripheral portion of the O-ring R is pressed in from the outside by the O-ring pressing member 14 in this embodiment, the O-ring R does not need to be gripped in order to attain the pressed-in state of the O-ring R. Therefore, even when grease, etc. is applied on the surface of the O-ring R and it becomes smooth, the pressing-in operation of the O-ring R can be performed without difficulty.

Additionally, in this embodiment, the pre-fitting process that each movable holding member 15 approaches the workpiece's inner peripheral surface Wa so as to fit a part of the O-ring R in the O-ring groove W can be performed before the release fitting process that the pressed-in state of the O-ring R is released and the O-ring R is generally fitted into the O-ring groove Wb due to its elasticity, and therefore the O-ring R can be certainly fitted in the O-ring groove Wb.

Additionally, in this embodiment, the O-ring which has been generally fitted in the O-ring groove in the release fitting process can be pressed into the O-ring groove by each movable holding member, and therefore the 0-ring can be certainly fitted in the O-ring groove.

Note that the O-ring support unit in the present invention is not necessarily configured by the two movable support members 15 and the three fixed support members 19 as mentioned in the embodiment above, and one, two or four or more fixed support members 19 can be provided.

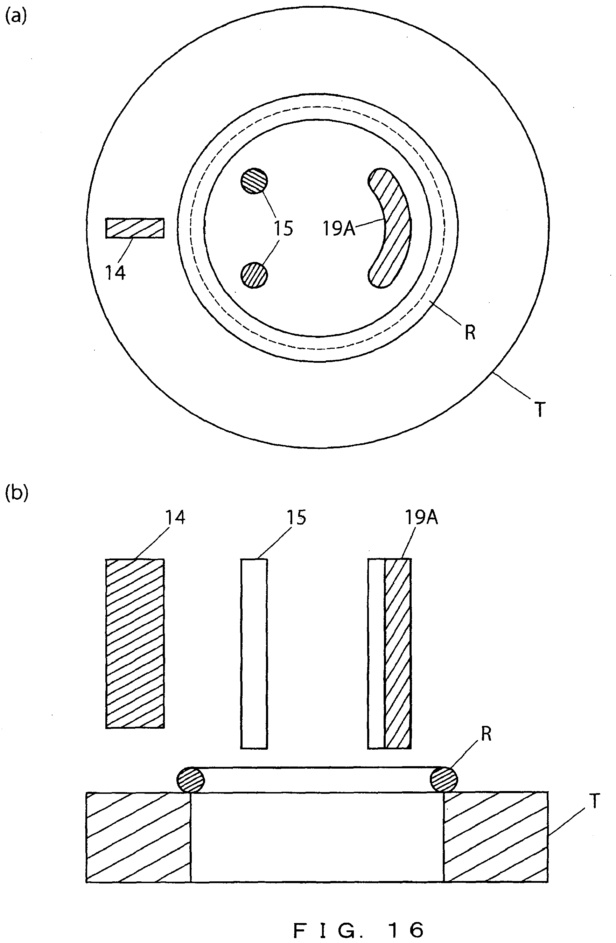

Additionally, as illustrated in FIG. 16, the O-ring support unit can also be formed of a fixed support member 19A having a circular arc section. In this example, a part of the O-ring R is supported by the fixed support member 19A in a circular arc shape.

Additionally, although the O-ring R is pressed into the O-ring groove Wb by each movable holding member 15 after the release fitting process in the above-mentioned embodiment, the O-ring may be pressed into the O-ring groove Wb by pressing a part other than the movable holding member 15 against the O-ring R.

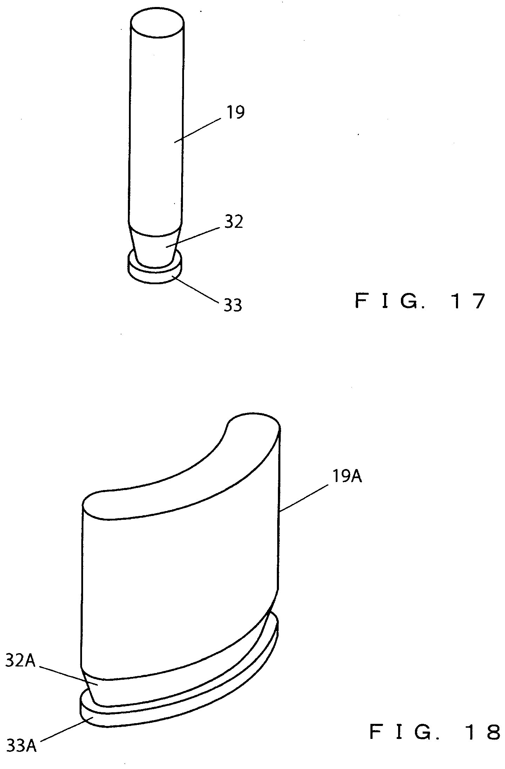

Additionally, as illustrated in FIG. 17, a tapered surface 32 and a projection portion 33 also can be provided to the distal end portion of the fixed support member 19 illustrated in FIG. 4. In this example, when the O-ring R is pressed in by the O-ring pressing member 14, the O-ring R is guided to the projection portion 33 side by the tapered surface 32 of the fixed support member 19 and positioned at the projection portion 33. Therefore, the O-ring R held by the O-ring mounting device 1 can be positioned more certainly to the O-ring groove Wb of the workpiece W.

Additionally, as illustrated in FIG. 18, a tapered surface 32A and a projection portion 33A also can be provided to the distal end portion of the fixed support member 19A illustrated in FIG. 16. Also in this example, when the O-ring R is pressed in by the O-ring pressing member 14, the O-ring R is guided to the projection portion 33A side by the tapered surface 32A of the fixed support member 19A and positioned at the projection portion 33A. Therefore, the O-ring R held by the O-ring mounting device 1 can be positioned more certainly to the O-ring groove Wb of the workpiece W.

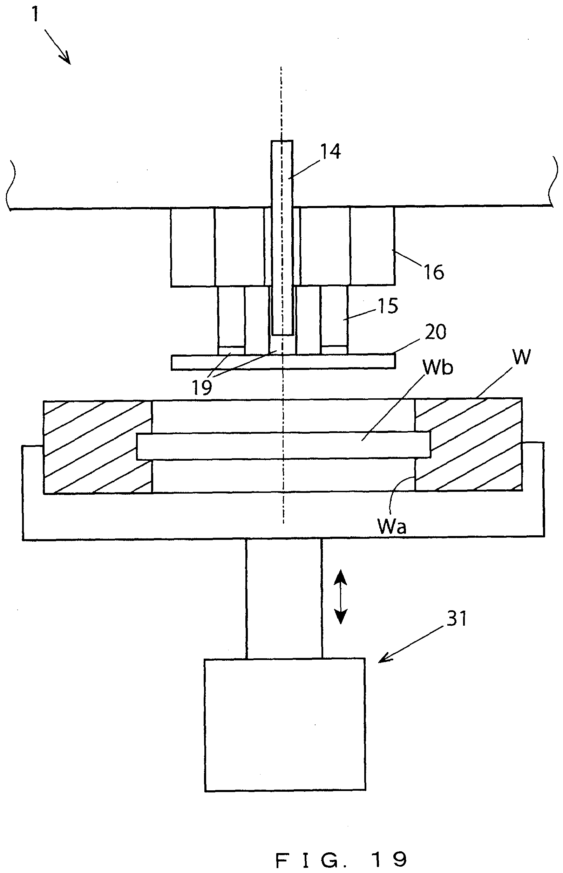

In an O-ring mounting device according to another embodiment of the present invention, instead of the arm 3 of the articulated robot 2 as the O-ring positioning unit, a workpiece driving unit 31 for moving the workpiece W upward and downward relative to the fixed O-ring mounting device 1 may be provided as illustrated in FIG. 19 so as to move the workpiece W upward by the workpiece driving unit 31.

In summary, the O-ring positioning unit only needs to relatively move the O-ring mounting device 1 and the workpiece W so as to insert and position the O-ring holding unit inside the workpiece's inner peripheral surface Wa.

### Description of Reference Numerals

1 ... O-ring mounting device
2 ... articulated robot
3 ... robot arm
4 ... wrist shaft
5 ... upper plate
6 ... lower plate
7 ... connecting member of upper and lower plates
8 ... frame body
9 ... mounting plate
10 .. support member
11 ... distal end side plate
12 ... notched portion of distal end side plate
13 ... through hole of distal end side plate
14 ... O-ring pressing member
15 ... movable support member
16 ... column member
17 ... notched portion in longitudinal direction of column member
18 ... notched portion in lateral direction of column member
19, 19A ... fixed support member
20 ... circular plate
21, 25, 28 .. mounting piece
22 ... elevating/lowering plate
23 ... cylinder for elevation/lowering
24 ... piston of cylinder for elevation/lowering
26 ... slide member
27 ... cylinder for slide
29 ... opening/closing member
30 ... cylinder for open/close
31 ... workpiece driving unit
32, 32A ... tapered surface of fixed support member
33, 33A ... projection portion of fixed support member
C ... center of distal end side plate (column member)
L ... rotation axis of wrist shaft of robot arm
R ... O-ring
T ... O-ring placing table
W ... workpiece
Wa ... inner peripheral surface of workpiece
Wb ... O-ring groove

## Claims

1. An O-ring mounting device for mounting an O-ring in an O-ring groove formed in a workpiece's inner peripheral surface, comprising:
an O-ring support unit capable of supporting the O-ring from its inside at at least three support points;
an O-ring pressing-in unit for pressing-in the O-ring from its outside between two support points of the at least three support points; and
a pressed-in state releasing unit for releasing a pressed-in state of the O-ring made by the O-ring pressing-in unit.

2. The O-ring mounting device according to claim 1,
wherein the at least three support points can be arranged inside the O-ring in a natural state where no external force is applied so as to be separated from an the inner peripheral portion of the O-ring, and
wherein the inner peripheral portion of the O-ring abuts on the at least three support points by pressing-in the O-ring by the O-ring pressing-in unit.

3. The O-ring mounting device according to claim 1 or 2,
wherein the O-ring pressing-in unit has a pressing member which abuts on an outer peripheral portion of the O-ring and presses-in the O-ring from its outside between the support points, and
wherein the pressed-in state releasing unit moves the pressing member which has pressed-in the O-ring in a direction intersecting with its pressing-in direction so as to release the pressed-in state of the O-ring.

4. The O-ring mounting device according to any one of claims 1 to 3, wherein the O-ring support unit has a function of widening an interval of the two support points so as to move the two support points to a direction of the workpiece's inner peripheral surface.

5. The O-ring mounting device according to any one of claims 1 to 4,
wherein the O-ring pressing-in unit has a pressing direction along a radial direction of the O-ring, and
wherein the at least three support points are arranged symmetrically relative to a virtual plane including a center axis of the O-ring and a virtual line in the pressing-in direction.

6. The O-ring mounting device according to claim 5,
wherein the two support points are arranged symmetrically relative to the virtual plane, and
wherein the at least three support points include the two support points and one support point in a position corresponding to the reference plane.

7. The O-ring mounting device according to claim 6,
wherein each support point is arranged on each side of the reference plane, adjacent to the one support point.

8. The O-ring mounting device according to any one of claims 1 to 7, wherein the support point is formed of a support plane including the support point.

9. The O-ring mounting device according to any one of claims 1 to 8,
wherein at least one of the at least three support points of the O-ring support unit is included in a tapered surface which guides the O-ring pressed-in by the O-ring pressing-in unit, and
wherein a projection portion which positions the O-ring is formed adjacent to the tapered surface.

10. The O-ring mounting device according to any one of claims 1 to 9, further comprising an O-ring positioning unit for inserting the O-ring which has been pressed-in by the O-ring pressing-in unit inside the workpiece's inner peripheral surface so that the O-ring is positioned in a position corresponding to the O-ring groove.

11. An articulated robot comprising the O-ring mounting device according to claim 10, wherein the O-ring positioning unit has an arm of the articulated robot.

12. An O-ring mounting method of mounting the O-ring in the O-ring groove formed in the workpiece's inner peripheral surface using the O-ring mounting device according to any one of claims 1 to 10, comprising:
an insert process in which the O-ring support unit is inserted inside the O-ring;
a pressing-in process in which the O-ring is pressed-in from its outside between the two support points by the O-ring pressing-in unit;
a positioning process in which the O-ring which has been pressed-in by the O-ring pressing-in unit is inserted inside the workpiece's inner peripheral surface so that the O-ring is positioned in a position corresponding to the O-ring groove; and
a release fitting process in which a pressed-in state of the O-ring made by the O-ring pressing-in unit is released by the pressed-in state releasing unit so that the O-ring is fitted in the O-ring groove due to its elasticity.

13. An O-ring mounting method of mounting the O-ring in the O-ring groove formed in the workpiece's inner peripheral surface using the O-ring mounting device according to claim 4, comprising:
an insert process in which the O-ring support unit is inserted inside the O-ring;
a pressing-in process in which the O-ring is pressed-in from its outside between the two support points by the O-ring pressing-in unit;
a positioning process in which the O-ring which has been pressed-in by the O-ring pressing-in unit is inserted inside the workpiece's inner peripheral surface so that the O-ring is positioned in a position corresponding to the O-ring groove;
a pre-fitting process in which the two support points are moved to a direction of the workpiece's inner peripheral surface so that a part of the O-ring is fitted in the O-ring groove; and
a release fitting process in which a pressed-in state of the O-ring made by the O-ring pressing-in unit is released by the pressed-in state releasing unit so that the O-ring is fitted in the O-ring groove due to its elasticity.

14. The O-ring mounting method according to claim 13,
wherein the two support points are moved along the workpiece's inner peripheral surface after the release fitting process so that the O-ring is pressed against a bottom portion of the O-ring groove.

15. The O-ring mounting method according to any one of claims 12 to 14, wherein the positioning process is performed by an arm operation of an articulated robot to which the O-ring support unit is mounted.
